# EUROPEAN PATENT SPECIFICATION

(11) **EP 3 524 580 B1**
(45) Date of publication and mention of the grant of the patent: **19.06.2024**
(21) Application number: 17906812.7
(22) Date of filing: 20.11.2017
(51) Int. Cl.: C03B 37/012, C03B 37/027

(54) **OPTICAL FIBRE PREFORM FOR MANUFACTURING MULTI-LAYER STRUCTURE OPTICAL FIBRE AND METHOD FOR MANUFACTURING OPTICAL FIBRE**
VORFORM FÜR OPTISCHE FASER ZUR HERSTELLUNG EINER OPTISCHEN FASER MIT MEHRSCHICHTIGER STRUKTUR UND VERFAHREN ZUR HERSTELLUNG EINER OPTISCHEN FASER
PRÉFORME DE FIBRE OPTIQUE POUR LA PRODUCTION D'UNE FIBRE OPTIQUE À STRUCTURE MULTICOUCHE ET PROCÉDÉ DE PRODUCTION DE FIBRE OPTIQUE

(30) Priority: 27.04.2017 CN 201710289375
(43) Date of publication of application: 14.08.2019
(73) Proprietor: Fiberhome Telecommunication Technologies Co., Ltd, Wuhan, Hubei 430000 (CN)
(72) Inventor: LUO, Wenyong, Wuhan Hubei 430000 (CN); KE, Yili, Wuhan Hubei 430000 (CN); DU, Cheng, Wuhan Hubei 430000 (CN); ZHANG, Tao, Wuhan Hubei 430000 (CN); LI, Wei, Wuhan Hubei 430000 (CN); CHEN, Chao, Wuhan Hubei 430000 (CN); WANG, Bi, Wuhan Hubei 430000 (CN); LEI, Qiong, Wuhan Hubei 430000 (CN); ZHANG, Jie, Wuhan Hubei 430000 (CN)
(74) Representative: Oberdorfer, Jürgen
(86) International application number: PCT/CN2017/111853
(87) International publication number: WO 2018/196352

(56) References cited:
- EP-A1- 2 261 181
- EP-A1- 2 261 181
- WO-A1-2005/102946
- CN-A- 1 989 078
- CN-A- 102 325 730
- CN-A- 104 788 014
- CN-A- 107 098 578
- NL-C2- 1 025 476
- US-A1- 2016 257 599

## Description

### Technical Field

The present invention relates to the technical field of optical fibre preforms, in particular to an optical fibre preform for manufacturing a multilayer structure optical fibre and a method for manufacturing an optical fibre.

### Background

The manufacturing of an optical fibre is divided into two steps: manufacturing an optical fibre preform and drawing the optical fibre preform to form the optical fibre. At present, the conventional methods for manufacturing the optical fibre preform include PCVD, MCVD, VAD, OVD and other technological methods. Generally, in these methods, an optical fibre core rod is manufactured first; then an optical fibre cladding is manufactured; the core rod and the cladding are combined to form an optical fibre preform that can be drawn to form a finally needed optical fibre; then the optical fibre preform is placed on a drawing tower to be drawn into optical fibres. These techniques have become common practices for producing optical fibres.

EP2261181A1 discloses a method relating to manufacturing a secondary preform that is used for drawing an optical fiber having a core and a cladding with different refractive indices. The method comprises the steps of - holding an outermost tube (0) with a closed lower end; - inserting at least an innermost tube coaxially aligned into the outermost tube; - selecting at least one sort of intermediate glass particles and one sort of innermost glass particles according to the profile determined for the secondary preform or the optical fiber; - filling the annular space between the neighbouring tubes with the intermediate glass particles; - filling the innermost tube that is empty or comprises a solid preform with the innermost glass particles; - performing a final thermal process including thermally processing at least the innermost glass particles, the intermediate glass particles and the outermost tube in order to obtain a fused secondary preform.

CN104788014A relates to an optical fiber perform preparation and optical fiber wiredrawing method. According to the method, a heating furnace device is adopted as a heat source, a bar is arranged in a quartz crucible container, wherein the including core of the bar is made from SiOz glass; the container is filled with glass sand or a silica sand mixture doped with F, B or other elements at high temperature, optical fiber perform with SiOz cladding, or with a silica sand mixture outer cladding layer doped with F, B or other elements, is fused and drawn on the periphery of the bar, and an optical fiber product also can be directly drawn through adjusting the drawing technological parameters.

WO2005/102946A1 relates to a method for fabricating an optical fiber comprises the steps of inserting a primary optical fiber preform having a first primary axis and an outer surface into an overcladding tube having a second primary axis and an inner surface, so that said outer surface and inner surface define an interior space; holding the primary preform in a centrally inserted position within the overcladding tube with said first and second primary axes in substantial alignment with each other; supplying overcladding grain into the interior space that is limited at the lower end of the overcladding tube by means of a closure; generating a condition of reduced pressure within the interior space that is limited at the upper end of the overcladding tube by means of an adjoiner, which holds the primary optical fiber preform and the overcladding tube in position; and heating the unprocessed secondary preform, that consists of the primary preform, the overcladding tube and the overcladding grain, at its lower end to a softened state and simultaneously or subsequently drawing an optical fiber therefrom.

NL1025476C2 discloses a rod in tube method for producing optical fibres, comprising reducing pressure inside cavity between rod and tube during heating and flushing with insert gas. During the heating step the pressure inside the annular cavity between the rod and tube is reduced and this cavity is flushed with an inert gas. A forming method for producing optical fibres comprises placing a tubular mantle around a rod-shaped primary forming part and heating so that the mantle is shrunk onto the rod. During the heating step the pressure inside the annular cavity between the rod and mantle is reduced and this cavity is flushed with an inert gas.

To cope with the increasingly fierce competition in the optical fibre market, improving the manufacturing efficiency of optical fibres has become the focus of research and development in the field of optical fibre manufacturing. A technical solution is urgently needed to maintain good optical fibre performance and simplify the optical fibre manufacturing process so as to improve the manufacturing efficiency of optical fibres.

### Summary

In view of the defects of the prior art, the present invention aims to provide an optical fibre preform for manufacturing a multilayer structure optical fibre and a method for manufacturing an optical fibre, which can not only maintain good optical fibre performance, but also simplify the optical fibre manufacturing process to improve the manufacturing efficiency of the optical fibre.

To realize the above purpose, the present invention adopts the following technical solution: an optical fibre preform for manufacturing a multilayer structure optical fibre includes a core rod, a quartz thin sleeve sleeving outside the core rod and a first quartz isolation tube sleeving between the core rod and the quartz thin sleeve; a powder for manufacturing an optical fibre cladding can be respectively filled between the core rod (1) and the first quartz isolation tube (3) and between the first quartz isolation tube (3) and the quartz thin sleeve (2); the optical fibre preform further includes a tail tube; the tail tube includes a tail rod, a first tail tube sleeving outside the tail rod, a second tail tube sleeving outside the first tail tube and a sealing plug arranged at the end of the tail rod, the first tail tube and the second tail tube; one end of the tail rod is connected to the core rod, and the other end of the tail rod is connected to the sealing plug; an opening at one end of the first tail tube is connected to the quartz isolation tube in a sealed manner, and an opening at the other end of the first tail tube is connected to the sealing plug in a sealed manner; an opening at one end of the second tail tube is connected to the quartz thin sleeve in a sealed manner, and an opening at the other end of the second tail tube is connected to the sealing plug in a sealed manner; a gap among the first tail tube, the tail rod and the sealing plug communicates with a gap between the core rod and the first quartz isolation tube to form a first section; the sealing plug is provided with an internal extraction port; the internal extraction port communicates with the first section; a gap among the second tail tube, the first tail tube and the sealing plug communicates with a gap between the first quartz isolation tube and the quartz thin sleeve to form a second section; the sealing plug is provided with an external extraction port; the external extraction port communicates with the second section.

Based on the above technical solution, the optical fibre preform further includes a sealing rotary cover and at least a first powder filling tube and at least a second powder filling tube that pass through the sealing rotary cover; the sealing rotary cover sleeves on the outer side of the second tail tube, and is connected to the second tail tube in a sealed and rotating manner; the first tail tube is provided with a first circular opening for the first powder filling tube to pass through; one end of each first powder filling tube is open on the sealing rotary cover, and the other end of each first powder filling tube sequentially passes through the sealing rotary cover and the first circular opening and is open in the gap between the core rod and the first quartz isolation tube; the second tail tube is provided with a second circular opening for the second powder filling tube to pass through; one end of each second powder filling tube is open on the sealing rotary cover, and the other end of each second powder filling tube sequentially passes through the sealing rotary cover and the second circular opening and is open in the gap between the first quartz isolation tube and the quartz thin sleeve.

Based on the above technical solution, the optical fibre preform includes two first powder filling tubes; the two first powder filling tubes are symmetrically arranged on the sealing rotary cover.

The present invention further provides a method for manufacturing a multilayer structure optical fibre using the above optical fibre preform, whereas:
a powder for manufacturing an optical fibre cladding is respectively filled between the core rod and the first quartz isolation tube and between the first quartz isolation tube and the quartz thin sleeve, and optical fibre drawing is performed at the same time.

Based on the above technical solution, a first powder filling tube is arranged between the core rod and the first quartz isolation tube; the first powder filling tube is circumferentially rotatable around the core rod, and through the first powder filling tube, the powder for manufacturing an optical fibre cladding is filled between the core rod and the first quartz isolation tube; a second powder filling tube is arranged between the first quartz isolation tube and the quartz thin sleeve; the second powder filling tube is circumferentially rotatable around the core rod; when the second powder filling tube is circumferentially rotated around the core rod, the powder for manufacturing an optical fibre cladding is filled between the first quartz isolation tube and the quartz thin sleeve.

Based on the above technical solution, the optical fibre preform is fixed on the drawing tower; when a quartz powder is filled into the first section and the second section, the external extraction port and the internal extraction port extract air outwards, so that the air pressure of the first section and the second section respectively reaches an air pressure value preset by a user, and optical fibre drawing is performed at the same time.

Based on the above technical solution, the optical fibre preform further includes a sealing rotary cover; the sealing rotary cover sleeves on the outer side of the second tail tube, and is connected to the second tail tube in a sealed and rotating manner; the first tail tube is provided with a first circular opening for the first powder filling tube to pass through; one end of each first powder filling tube is open on the sealing rotary cover, and the other end of each first powder filling tube sequentially passes through the sealing rotary cover and the first circular opening and is open in a gap between the core rod and the first quartz isolation tube; the second tail tube is provided with a second circular opening for the second powder filling tube to pass through; one end of each second powder filling tube is open on the sealing rotary cover, and the other end of each second powder filling tube sequentially passes through the sealing rotary cover and the second circular opening and is open in a gap between the first quartz isolation tube and the quartz thin sleeve; during optical fibre drawing, the sealing rotary cover is driven to rotate, so that the first powder filling tube and the second powder filling tube are circumferentially rotated around the core rod.

The present invention further provides an optical fibre preform for manufacturing a multilayer structure optical fibre. The optical fibre preform includes a core rod, a quartz thin sleeve sleeving outside the core rod and a first quartz isolation tube sleeving between the core rod and the quartz thin sleeve; a second quartz isolation tube is further arranged between the first quartz isolation tube and the quartz thin sleeve; a powder for manufacturing an optical fibre cladding can be respectively filled between the core rod and the first quartz isolation tube, between the first quartz isolation tube and the second quartz isolation tube and between the second quartz isolation tube and the quartz thin sleeve. The optical fibre preform further includes a tail tube; the tail tube includes a tail rod, a first tail tube sleeving outside the tail rod, a second tail tube sleeving outside the first tail tube and a sealing plug arranged at the end of the tail rod, the first tail tube and the second tail tube; one end of the tail rod is connected to the core rod, and the other end of the tail rod is connected to the sealing plug; an opening at one end of the first tail tube is connected to the first quartz isolation tube in a sealed manner, and an opening at the other end of the first tail tube is connected to the sealing plug in a sealed manner; an opening at one end of the second tail tube is connected to the second quartz isolation tube in a sealed manner, and an opening at the other end of the second tail tube is connected to the sealing plug in a sealed manner; a gap among the first tail tube, the tail rod and the sealing plug communicates with a gap between the core rod and the first quartz isolation tube to form a first section; the sealing plug is provided with an internal extraction port; the internal extraction port communicates with the first section; a gap among the second tail tube, the first tail tube and the sealing plug communicates with a gap between the first quartz isolation tube and the second quartz isolation tube to form a second section; the sealing plug is provided with an external extraction port; the external extraction port communicates with the second section.

The present invention further provides a method for manufacturing a multilayer structure optical fibre using the right above optical fibre preform:
a powder for manufacturing an optical fibre cladding is respectively filled between the core rod and the first quartz isolation tube, between the first quartz isolation tube and the second quartz isolation tube and between the second quartz isolation tube and the quartz thin sleeve, and optical fibre drawing is performed at the same time.

Compared with the prior art, the present invention has the following advantages:
(1) in the present invention, a combination of the core rod, the first quartz isolation tube and the quartz thin sleeve is directly placed on the drawing tower for drawing; during the drawing process, when an optical fibre is formed by drawing, an optical fibre manufacturing powder is filled in the gap between the core rod and the first quartz thin sleeve and in the gap between the first quartz isolation tube and the quartz thin sleeve to form an optical fibre cladding, which eliminates a cladding manufacturing process from the manufacturing process of the optical fibre preform, and improves the manufacturing efficiency of the optical fibre; meanwhile, the first quartz isolation tube effectively realizes isolation between the layers of the multilayer structure optical fibre, thereby avoiding interfering with other layers when the optical fibre manufacturing powder is filled, and avoiding affecting the performance indexes of the optical fibre, such as optical fibre attenuation;
(2) in the present invention, a first powder filling tube is arranged between the core rod and the first quartz isolation tube, and a second powder filling tube is arranged between the first quartz isolation tube and the quartz thin sleeve; when the first powder filling tube and the second powder filling tube are circumferentially rotated around the core rod, the optical fibre manufacturing powders are filled, so as to realize uniform filling of the optical fibre manufacturing powders; and
(3) in the present invention, a combination type tail tube is arranged at the end of the optical fibre preform; during optical fibre drawing, in order that the optical fibre manufacturing powders filled in the gap between the core rod and the first quartz isolation tube and in the gap between the first quartz isolation tube and the quartz thin sleeve are well solidly melted, the air of the first section and the second section is respectively extracted to control low pressure, thereby realizing good solid melting for each layer of the multilayer structure optical fibre.

### Brief Description of the Drawings

- FIG. 1: is a structural schematic diagram of an optical fibre preform (excluding a second quartz isolation tube) for manufacturing a multilayer structure optical fibre according to an embodiment of the present invention; and
- FIG. 2: is a structural schematic diagram of an optical fibre preform (including a second quartz isolation tube) for manufacturing a multilayer structure optical fibre according to an embodiment of the present invention.

Wherein: 1-core rod; 2-quartz thin sleeve; 3-first quartz isolation tube; 4-second quartz isolation tube; 5-tail tube; 51-tail rod; 52-first tail tube; 53-second tail tube; 54-sealing plug; 55-internal extraction port; 56-external extraction port; 57-first circular opening; 58-second circular opening; 6-sealing rotary cover; 7-first powder filling tube; 8-second powder filling tube; 9-first section; 10-second section; 11-third powder filling tube; 12-fourth powder filling tube; and 13-fifth powder filling tube.

### Detailed Description of the Embodiments

The present invention is further described below with reference to the drawing and embodiments in detail.

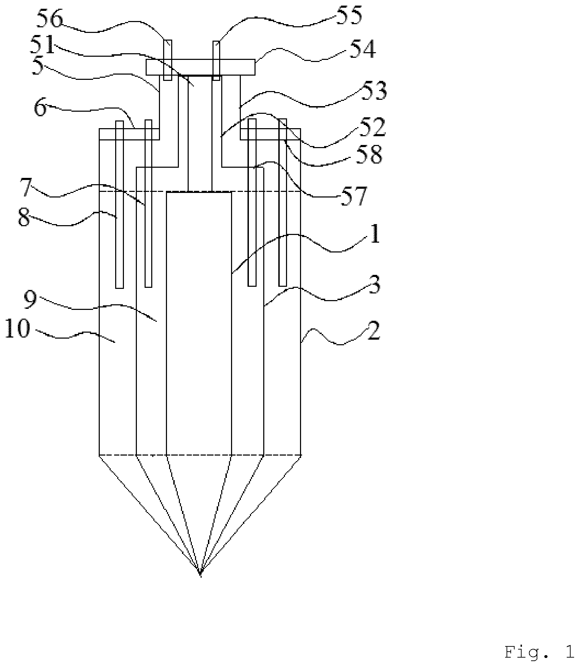

As shown in FIG. 1, an embodiment of the present invention provides an optical fibre preform for manufacturing a multilayer structure optical fibre. The optical fibre preform includes a core rod 1, a quartz thin sleeve 2 sleeving outside the core rod 1 and a first quartz isolation tube 3 sleeving between the core rod 1 and the quartz thin sleeve 2; a powder for manufacturing an optical fibre cladding can be respectively filled between the core rod 1 and the first quartz isolation tube 3 and between the first quartz isolation tube 3 and the quartz thin sleeve 2.

In the present invention, a combination of the core rod 1, the first quartz isolation tube 3 and the quartz thin sleeve 2 is directly placed on a drawing tower for drawing; during the drawing process, when an optical fibre is formed by drawing, an optical fibre manufacturing powder is filled in a gap between the core rod 1 and the first quartz isolation tube 3 and in a gap between the first quartz isolation tube 3 and the quartz thin sleeve 2 to form an optical fibre cladding, which eliminates a cladding manufacturing process from the manufacturing process of the optical fibre preform, and improves the manufacturing efficiency of the optical fibre; meanwhile, the first quartz isolation tube 3 effectively realizes isolation between the layers of the multilayer structure optical fibre, thereby avoiding interfering with other layers when the optical fibre manufacturing powder is filled, and avoiding affecting the performance indexes of the optical fibre, such as optical fibre attenuation.

In the manufacture of the above multilayer structure optical fibre, the manufacturing process of the core rod 1 can be PCVD, MCVD, OVD and VAD, etc.; the core rod 1 includes a core area and a first cladding; the constituent material of the core area is a mixture of silicon dioxide and germanium dioxide, which achieves a high refractive index; when the first cladding of the multilayer structure optical fibre needs to maintain a pure silicon structure and a second cladding needs to have a low refractive index, a pure silicon dioxide powder is filled in the gap between the core rod 1 and the first quartz isolation tube 3, and a silicon dioxide and fluoride mixed powder is filled between the first quartz isolation tube 3 and the quartz thin sleeve 2.

When the first cladding of the multilayer structure optical fibre needs to have a very low refractive index, far beyond the capability of the existing conventional manufacturing process of optical fibres, and the second cladding needs to maintain a pure silicon structure, a silicon dioxide and fluoride mixed powder is filled in the gap between the core rod 1 and the first quartz isolation tube 3, and a pure silicon dioxide powder is filled between the first quartz isolation tube 3 and the quartz thin sleeve 2.

When the multilayer structure optical fibre demands that the core area is a pure silicon core and the first cladding and the second cladding have a very high refractive index, the techniques such as PCVD, MCVD, OVD and VAD may be adopted to prepare a pure silicon core rod 1; a silicon dioxide and germanium dioxide mixed powder is filled in the gap between the core rod 1 and the first quartz isolation tube 3 and in the gap between the first quartz isolation tube 3 and the quartz thin sleeve 2; meanwhile, the thickness of the first quartz isolation tube 3 and the quartz thin sleeve 2 is increased, thereby producing wide pure silicon isolation between the two claddings of the thus drawn optical fibre and producing a thick pure silicon layer outside the second cladding to meet the transmission performance requirements of the multilayer structure optical fibre.

The optical fibre preform further includes a tail tube 5; the tail tube 5 includes a tail rod 51, a first tail tube 52 sleeving outside the tail rod 51, a second tail tube 53 sleeving outside the first tail tube 52 and a sealing plug 54 arranged at the end of the tail rod 51, the first tail tube 52 and the second tail tube 53; one end of the tail rod 51 is connected to the core rod 1, and the other end of the tail rod 51 is connected to the sealing plug 54; an opening at one end of the first tail tube 52 is connected to the quartz isolation tube in a sealed manner, and an opening at the other end of the first tail tube 52 is connected to the sealing plug 54 in a sealed manner; an opening at one end of the second tail tube 53 is connected to the quartz thin sleeve 2 in a sealed manner, and an opening at the other end of the second tail tube 53 is connected to the sealing plug 54 in a sealed manner; a gap among the first tail tube 52, the tail rod 51 and the sealing plug 54 communicates with the gap between the core rod 1 and the first quartz isolation tube 3 to form a first section 9; the sealing plug 54 is provided with an internal extraction port 55; the internal extraction port 55 communicates with the first section 9; a gap among the second tail tube 53, the first tail tube 52 and the sealing plug 54 communicates with the gap between the first quartz isolation tube 3 and the quartz thin sleeve 2 to form a second section 10; the sealing plug 54 is provided with an external extraction port 56; the external extraction port 56 communicates with the second section 10.

In the present invention, a combination type tail tube 5 is arranged at the end of the optical fibre preform; during optical fibre drawing, in order that the optical fibre manufacturing powders filled in the gap between the core rod 1 and the first quartz isolation tube 3 and in the gap between the first quartz isolation tube 3 and the quartz thin sleeve 2 are well solidly melted, the air of the first section 9 and the second section 10 is respectively extracted to control low pressure, thereby realizing good solid melting for each layer of the multilayer structure optical fibre.

The optical fibre preform further includes a sealing rotary cover 6 and at least a first powder filling tube 7 and at least a second powder filling tube 8 that pass through the sealing rotary cover 6; the sealing rotary cover 6 sleeves on the outer side of the second tail tube 53, and is connected to the second tail tube 53 in a sealed and rotating manner; the first tail tube 52 is provided with a first circular opening 57 for the first powder filling tube 7 to pass through; one end of each first powder filling tube 7 is open on the sealing rotary cover 6, and the other end of each first powder filling tube 7 sequentially passes through the sealing rotary cover 6 and the first circular opening 57 and is open in the gap between the core rod 1 and the first quartz isolation tube 3; the second tail tube 53 is provided with a second circular opening 58 for the second powder filling tube 8 to pass through; one end of each second powder filling tube 8 is open on the sealing rotary cover 6, and the other end of each second powder filling tube 8 sequentially passes through the sealing rotary cover 6 and the second circular opening 58 and is open in the gap between the first quartz isolation tube 3 and the quartz thin sleeve 2.

In the embodiment of the present invention, the first powder filling tube 7 is arranged between the core rod 1 and the first quartz isolation tube 3, and the second powder filling tube 8 is arranged between the first quartz isolation tube 3 and the quartz thin sleeve 2; when the first powder filling tube 7 and the second powder filling tube 8 are circumferentially rotated around the core rod 1, the optical fibre manufacturing powders are filled at the same time, so as to realize uniform filling of the optical fibre manufacturing powders.

The optical fibre preform includes two first powder filling tubes 7; the two powder filling tubes 7 are symmetrically arranged on the sealing rotary cover 6.

An embodiment of the present invention further provides a method for manufacturing a multilayer structure optical fibre using the optical fibre preform: a powder for manufacturing an optical fibre cladding is respectively filled between the core rod 1 and the first quartz isolation tube 3 and between the first quartz isolation tube 3 and the quartz thin sleeve 2, and optical fibre drawing is performed at the same time.

A first powder filling tube 7 is arranged between the core rod 1 and the first quartz isolation tube 3; the first powder filling tube 7 is circumferentially rotatable around the core rod 1, and through the first powder filling tube 7, the powder for manufacturing an optical fibre cladding is filled between the core rod 1 and the first quartz isolation tube 3; a second powder filling tube 8 is arranged between the first quartz isolation tube 3 and the quartz thin sleeve 2; the second powder filling tube 8 is circumferentially rotatable around the core rod 1; when the second powder filling tube 8 is circumferentially rotated around the core rod 1, the powder for manufacturing an optical fibre cladding is filled between the first quartz isolation tube 3 and the quartz thin sleeve 2.

The optical fibre preform further includes a tail tube 5; the tail tube 5 includes a tail rod 51, a first tail tube 52 sleeving outside the tail rod 51, a second tail tube 53 sleeving outside the first tail tube 52 and a sealing plug 54 arranged at the end of the tail rod 51, the first tail tube 52 and the second tail tube 53; one end of the tail rod 51 is connected to the core rod 1, and the other end of the tail rod 51 is connected to the sealing plug 54; an opening at one end of the first tail tube 52 is connected to the quartz isolation tube in a sealed manner, and an opening at the other end of the first tail tube 52 is connected to the sealing plug 54 in a sealed manner; an opening at one end of the second tail tube 53 is connected to the quartz thin sleeve 2 in a sealed manner, and an opening at the other end of the second tail tube 53 is connected to the sealing plug 54 in a sealed manner; a gap among the first tail tube 52, the tail rod 51 and the sealing plug 54 communicates with a gap between the core rod 1 and the first quartz isolation tube 3 to form a first section 9; the sealing plug 54 is provided with an internal extraction port 55; the internal extraction port 55 communicates with the first section 9; a gap among the second tail tube 53, the first tail tube 52 and the sealing plug 54 communicates with a gap between the first quartz isolation tube 3 and the quartz thin sleeve 2 to form a second section 10; the sealing plug 54 is provided with an external extraction port 56; the external extraction port 56 communicates with the second section 10.

The optical fibre preform is fixed on a drawing tower; when the first section 9 and the second section 10 are filled with a quartz powder, the external extraction port 56 and the internal extraction port 55 extract air outwards so that the air pressure of the first section 9 and the second section 10 respectively reaches an air pressure value preset by a user, and optical fibre drawing is performed at the same time.

The optical fibre preform further includes a sealing rotary cover 6; the sealing rotary cover 6 sleeves on the outer side of the second tail tube 53, and is connected to the second tail tube 53 in a sealed and rotating manner; the first tail tube 52 is provided with a first circular opening 57 for the first powder filling tube 7 to pass through; one end of each first powder filling tube 7 is open on the sealing rotary cover 6, and the other end of each first powder filling tube 7 sequentially passes through the sealing rotary cover 6 and the first circular opening 57 and is open in the gap between the core rod 1 and the first quartz isolation tube 3; the second tail tube 53 is provided with a second circular opening 58 for the second powder filling tube 8 to pass through; one end of each second powder filling tube 8 is open on the sealing rotary cover 6, and the other end of each second powder filling tube 8 sequentially passes through the sealing rotary cover 6 and the second circular opening 58 and is open in the gap between the first quartz isolation tube 3 and the quartz thin sleeve 2; during optical fibre drawing, the sealing rotary cover 6 is driven to rotate so that the first powder filling tube 7 and the second powder filling tube 8 are circumferentially rotated around the core rod 1.

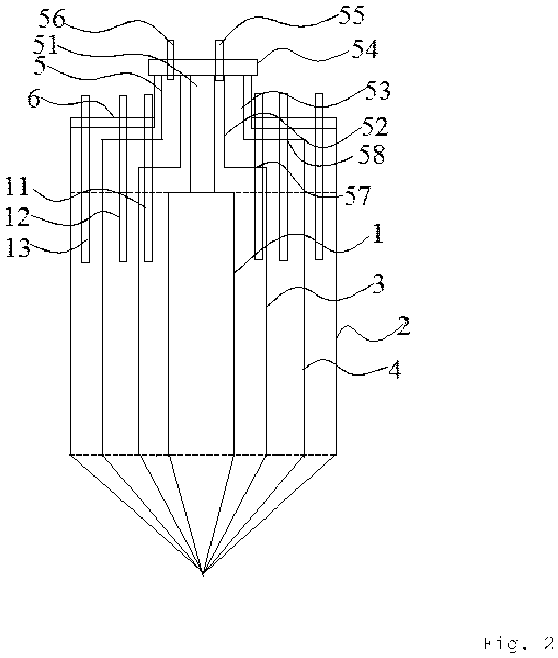

As shown in FIG. 2, an embodiment of the present invention further provides an optical fibre preform for manufacturing a multilayer structure optical fibre. The optical fibre preform includes a core rod 1, a quartz thin sleeve 2 sleeving outside the core rod 1 and a first quartz isolation tube 3 sleeving between the core rod 1 and the quartz thin sleeve 2; a second quartz isolation tube 4 is further arranged between the first quartz isolation tube 3 and the quartz thin sleeve 2; a powder for manufacturing an optical fibre cladding can be respectively filled between the core rod 1 and the first quartz isolation tube 3, between the first quartz isolation tube 3 and the second quartz isolation tube 4 and between the second quartz isolation tube 4 and the quartz thin sleeve 2.

A third powder filling tube 11 is arranged between the core rod 1 and the first quartz isolation tube 3, a fourth powder filling tube 12 is arranged between the first quartz isolation tube 3 and the second quartz isolation tube 4, and a fifth powder filling tube 13 is arranged between the second quartz isolation tube 4 and the quartz thin sleeve 2; when the third powder filling tube 11, the fourth powder filling tube 12 and the fifth powder filling tube 13 are respectively circumferentially rotated around the core rod 1, the powders for manufacturing an optical fibre cladding are filled at the same time, so as to realize uniform filling of the powders for manufacturing an optical fibre cladding.

When the multilayer structure optical fibre demands a very high refractive index in the centre and a very low refractive index in the first cladding, which are far beyond the capability of the existing conventional manufacturing process of optical fibres, a high-proportion germanium dioxide and silicon dioxide mixed powder may be filled in the first quartz isolation tube 3, a silicon dioxide and fluoride mixed powder may be filled in the area between the first quartz isolation tube 3 and the second quartz isolation tube 4 corresponding to the first cladding, and a pure silicon dioxide powder may be filled in the area between the second quartz isolation tube 4 and the quartz thin sleeve 2 corresponding to the second cladding.

When the multilayer structure optical fibre demands pure silicon in the centre and a very high refractive index in the second cladding, which are far beyond the capability of the existing conventional manufacturing process of optical fibres, a pure silicon dioxide powder may be filled in the first quartz isolation tube 3 and in the area between the first quartz isolation tube 3 and the second quartz isolation tube 4 corresponding to the first cladding, and a high-proportion germanium dioxide and silicon dioxide mixed powder may be filled in the area between the second quartz isolation tube 4 and the quartz thin sleeve 2 corresponding to the second cladding.

An embodiment of the present invention further provides a method for manufacturing a multilayer structure optical fibre using the optical fibre preform:
the optical fibre preform is manufactured; and a powder for manufacturing an optical fibre cladding is respectively filled between the core rod 1 and the first quartz isolation tube 3, between the first quartz isolation tube 3 and the second quartz isolation tube 4, and between the second quartz isolation tube 4 and the quartz thin sleeve 2, and optical fibre drawing is performed at the same time.

## Claims

1. An optical fibre preform for manufacturing a multilayer structure optical fibre, wherein the optical fibre preform comprises a core rod (1), a quartz thin sleeve (2) sleeving outside the core rod (1) and a first quartz isolation tube (3) sleeving between the core rod (1) and the quartz thin sleeve (2); a powder for manufacturing an optical fibre cladding can be respectively filled between the core rod (1) and the first quartz isolation tube (3) and between the first quartz isolation tube (3) and the quartz thin sleeve (2);
the optical fibre preform further comprises a tail tube (5); the tail tube (5) comprises a tail rod (51), a first tail tube (52) sleeving outside the tail rod (51), a second tail tube (53) sleeving outside the first tail tube (52) and a sealing plug (54) arranged at the end of the tail rod (51), the first tail tube (52) and the second tail tube (53); one end of the tail rod (51) is connected to the core rod (1), and the other end of the tail rod (51) is connected to the sealing plug (54); an opening at one end of the first tail tube (52) is connected to the quartz isolation tube in a sealed manner, and an opening at the other end of the first tail tube (52) is connected to the sealing plug (54) in a sealed manner; an opening at one end of the second tail tube (53) is connected to the quartz thin sleeve (2) in a sealed manner, and an opening at the other end of the second tail tube (53) is connected to the sealing plug (54) in a sealed manner;
a gap among the first tail tube (52), the tail rod (51) and the sealing plug (54) communicates with a gap between the core rod (1) and the first quartz isolation tube (3) to form a first section (9); the sealing plug (54) is provided with an internal extraction port (55); the internal extraction port (55) communicates with the first section (9);
a gap among the second tail tube (53), the first tail tube (52) and the sealing plug (54) communicates with a gap between the first quartz isolation tube (3) and the quartz thin sleeve (2) to form a second section (10); the sealing plug (54) is provided with an external extraction port (56); the external extraction port (56) communicates with the second section (10).

2. The optical fibre preform for manufacturing a multilayer structure optical fibre according to claim 1, wherein the optical fibre preform further comprises a sealing rotary cover (6) and at least a first powder filling tube (7) and at least a second powder filling tube (8) that pass through the sealing rotary cover (6);
the sealing rotary cover (6) sleeves on the outer side of the second tail tube (53), and is connected to the second tail tube (53) in a sealed and rotating manner;
the first tail tube (52) is provided with a first circular opening (57) for the first powder filling tube (7) to pass through; one end of each first powder filling tube (7) is open on the sealing rotary cover (6), and the other end of each first powder filling tube (7) sequentially passes through the sealing rotary cover (6) and the first circular opening (57) and is open in the gap between the core rod (1) and the first quartz isolation tube (3);
the second tail tube (53) is provided with a second circular opening (58) for the second powder filling tube (8) to pass through; one end of each second powder filling tube (8) is open on the sealing rotary cover (6), and the other end of each second powder filling tube (8) sequentially passes through the sealing rotary cover (6) and the second circular opening (58) and is open in the gap between the first quartz isolation tube (3) and the quartz thin sleeve (2).

3. The optical fibre preform for manufacturing a multilayer structure optical fibre according to claim 2, wherein the optical fibre preform comprises two first powder filling tubes (7); the two first powder filling tubes (7) are symmetrically arranged on the sealing rotary cover (6).

4. A method for manufacturing a multilayer structure optical fibre using the optical fibre preform according to claim 1, wherein
a powder for manufacturing an optical fibre cladding is respectively filled between the core rod (1) and the first quartz isolation tube (3) and between the first quartz isolation tube (3) and the quartz thin sleeve (2), and optical fibre drawing is performed at the same time.

5. The method for manufacturing a multilayer structure optical fibre according to claim 4, wherein a first powder filling tube (7) is arranged between the core rod (1) and the first quartz isolation tube (3); the first powder filling tube (7) is circumferentially rotatable around the core rod (1), and through the first powder filling tube (7), the powder for manufacturing an optical fibre cladding is filled between the core rod (1) and the first quartz isolation tube (3);
a second powder filling tube (8) is arranged between the first quartz isolation tube (3) and the quartz thin sleeve (2); the second powder filling tube (8) is circumferentially rotatable around the core rod (1); when the second powder filling tube (8) is circumferentially rotated around the core rod (1), the powder for manufacturing an optical fibre cladding is filled between the first quartz isolation tube (3) and the quartz thin sleeve (2).

6. The method for manufacturing a multilayer structure optical fibre according to claim 4, wherein
the optical fibre preform is fixed on a drawing tower; when the first section (9) and the second section (10) are filled with a quartz powder, the external extraction port (56) and the internal extraction port (55) extract air outwards so that the air pressure of the first section (9) and the second section (10) respectively reaches an air pressure value preset by a user, and optical fibre drawing is performed at the same time.

7. The method for manufacturing a multilayer structure optical fibre according to claim 5, wherein the optical fibre preform further comprises a sealing rotary cover (6); the sealing rotary cover (6) sleeves on the outer side of the second tail tube (53), and is connected to the second tail tube (53) in a sealed and rotating manner; the first tail tube (52) is provided with a first circular opening (57) for the first powder filling tube (7) to pass through; one end of each first powder filling tube (7) is open on the sealing rotary cover (6), and the other end of each first powder filling tube (7) sequentially passes through the sealing rotary cover (6) and the first circular opening (57) and is open in a gap between the core rod (1) and the first quartz isolation tube (3);
the second tail tube (53) is provided with a second circular opening (58) for the second powder filling tube (8) to pass through; one end of each second powder filling tube (8) is open on the sealing rotary cover (6), and the other end of each second powder filling tube (8) sequentially passes through the sealing rotary cover (6) and the second circular opening (58) and is open in a gap between the first quartz isolation tube (3) and the quartz thin sleeve (2);
during optical fibre drawing, the sealing rotary cover (6) is driven to rotate so that the first powder filling tube (7) and the second filling tube (8) are circumferentially rotated around the core rod (1).

8. An optical fibre preform for manufacturing a multilayer structure optical fibre, wherein the optical fibre preform comprises a core rod (1), a quartz thin sleeve (2) sleeving outside the core rod (1) and a first quartz isolation tube (3) sleeving between the core rod (1) and the quartz thin sleeve (2); a second quartz isolation tube (4) is further arranged between the first quartz isolation tube (3) and the quartz thin sleeve (2); a powder for manufacturing an optical fibre cladding can be respectively filled between the core rod (1) and the first quartz isolation tube (3), between the first quartz isolation tube (3) and the second quartz isolation tube (4) and between the second quartz isolation tube (4) and the quartz thin sleeve (2); the optical fibre preform further comprises a tail tube (5); the tail tube (5) comprises a tail rod (51), a first tail tube (52) sleeving outside the tail rod (51), a second tail tube (53) sleeving outside the first tail tube (52) and a sealing plug (54) arranged at the end of the tail rod (51), the first tail tube (52) and the second tail tube (53); one end of the tail rod (51) is connected to the core rod (1), and the other end of the tail rod (51) is connected to the sealing plug (54); an opening at one end of the first tail tube (52) is connected to the first quartz isolation tube (3) in a sealed manner, and an opening at the other end of the first tail tube (52) is connected to the sealing plug (54) in a sealed manner; an opening at one end of the second tail tube (53) is connected to the second quartz isolation tube (4) in a sealed manner, and an opening at the other end of the second tail tube (53) is connected to the sealing plug (54) in a sealed manner;
a gap among the first tail tube (52), the tail rod (51) and the sealing plug (54) communicates with a gap between the core rod (1) and the first quartz isolation tube (3) to form a first section (9); the sealing plug (54) is provided with an internal extraction port (55); the internal extraction port (55) communicates with the first section (9);
a gap among the second tail tube (53), the first tail tube (52) and the sealing plug (54) communicates with a gap between the first quartz isolation tube (3) and the second quartz isolation tube (4) to form a second section (10); the sealing plug (54) is provided with an external extraction port (56); the external extraction port (56) communicates with the second section (10).

9. A method for manufacturing a multilayer structure optical fibre using the optical fibre preform according to claim 8, wherein
a powder for manufacturing an optical fibre cladding is respectively filled between the core rod (1) and the first quartz isolation tube (3), between the first quartz isolation tube (3) and the second quartz isolation tube and between the second quartz isolation tube and the quartz thin sleeve (2), and optical fibre drawing is performed at the same time.

## Patentansprüche

1. Optische Faservorform zur Herstellung einer optischen Faser mit Mehrlagenstruktur, wobei die optische Faservorform einen Kernstab (1), eine dünne Quarzhülle (2), welche eine Hülle außerhalb des Kernstabs (1) bildet, und eine erste Quarztrennröhre (3), welche eine Hülle zwischen dem Kernstab (1) und der dünnen Quarzhülle (2) bildet, aufweist; wobei ein Pulver zur Herstellung eines optischen Fasermantels jeweils zwischen dem Kernstab (1) und der ersten Quarztrennröhre (3) und zwischen der ersten Quarztrennröhre (3) und der dünnen Quarzhülle (2) eingefüllt werden kann;
wobei die optische Faservorform ferner eine Endröhre (5) aufweist; die Endröhre (5) einen Endstab (51), eine erste Endröhre (52), welche eine Hülle außerhalb des Endstabs (51) bildet, eine zweite Endröhre (53), welche eine Hülle außerhalb des ersten Endröhre bildet, und einen Dichtungsstopfen (54) aufweist, der an dem Ende des Endstabs (51), der erste Endröhre (52) und der zweiten Endröhre (53) angeordnet ist; wobei ein Ende des Endstabs (51) mit dem Kernstab (1) verbunden ist, und das andere Ende des Endstabs (51) mit dem Dichtungsstopfen (54) verbunden ist; eine Öffnung an einem Ende der ersten Endröhre (52) mit der Quarztrennröhre abdichtend verbunden ist, und eine Öffnung an dem anderen Ende der ersten Endröhre (52) mit dem Dichtungsstopfen (54) abdichtend verbunden ist; eine Öffnung an einem Ende der zweiten Endröhre (53) mit der dünnen Quarzhülle (2) abdichtend verbunden ist, und eine Öffnung an dem anderen Ende der zweiten Endröhre (53) mit dem Dichtungsstopfen (54) abdichtend verbunden ist;
wobei ein Spalt zwischen der ersten Endröhre (52), dem Endstab (51) und dem Dichtungsstopfen (54) mit einem Spalt zwischen dem Kernstab (1) und der ersten Quarztrennröhre (3) so kommuniziert, dass ein erster Abschnitt (9) gebildet wird; wobei der Dichtungstopfen (54) mit einer internen Extraktionsöffnung (55) versehen ist; die interne Extraktionsöffnung (55) mit dem ersten Abschnitt (9) kommuniziert;
ein Spalt zwischen der zweiten Endröhre (53), der ersten Endröhre (52) und dem Dichtungsstopfen (54) mit einem Spalt zwischen der ersten Quarztrennröhre (3) und der dünnen Quarzhülle (2) so kommuniziert, dass ein zweiter Abschnitt (10) gebildet wird; wobei der Dichtungsstopfen (54) mit einer externen Extraktionsöffnung (56) versehen ist; die externe Extraktionsöffnung (56) mit dem zweiten Abschnitt (10) kommuniziert.

2. Optische Faservorform zur Herstellung einer optischen Faser mit Mehrlagenstruktur nach Anspruch 1, wobei die optische Faservorform ferner eine dichtende rotierende Abdeckung (6) und zumindest eine erste Pulverbefüllungsröhre (7) und zumindest eine zweite Pulverbefüllungsröhre (8) aufweist, welche durch die dichtende rotierende Abdeckung (6) hindurchführen; die dichtende rotierende Abdeckung (6) eine Hülle auf der Außenseite der zweiten Endröhre (53) bildet und mit der zweiten Endröhre (53) abdichtend und rotierend verbunden ist;
die erste Endröhre (52) mit einer ersten kreisförmigen Öffnung (57) zum Hindurchführen der ersten Pulverbefüllungsröhre (7) versehen ist; ein Ende von einer jeweiligen ersten Pulverbefüllungsröhre (7) ist auf der dichtenden rotierenden Abdeckung (6) offen, und das andere Ende von einer jeweiligen ersten Pulverbefüllungsröhre (7) nacheinander die dichtende rotierende Abdeckung (6) und die erste kreisförmige Öffnung (57) durchgreift und in dem Spalt zwischen dem Kernstab (1) und der ersten Quarztrennröhre (3) offen ist;
wobei die zweite Endröhre (53) mit einer zweiten kreisförmigen Öffnung (58) zum Hindurchführen der zweiten Pulverbefüllungsröhre (8) versehen ist; wobei ein Ende von einer jeweiligen zweiten Pulverbefüllungsröhre (8) auf der dichtenden rotierenden Abdeckung (6) offen ist, und das andere Ende von einer jeweiligen zweiten Pulverbefüllungsröhre (8) nacheinander die dichtende rotierende Abdeckung (6) und die zweite kreisförmige Öffnung (58) durchgreift und in dem Spalt zwischen der ersten Quarttrennröhre (3) und der dünnen Quarzhülle (2) offen ist.

3. Optische Faservorform zur Herstellung einer optischen Faser mit Mehrlagenstruktur nach Anspruch 2, wobei die optische Faservorform zwei erste Pulverbefüllungsröhren (7) aufweist; wobei die zwei ersten Pulverbefüllungsröhren (7) auf der dichtenden rotierenden Abdeckung (6) symmetrisch angeordnet sind.

4. Verfahren zur Herstellung einer optischen Faser mit Mehrlagenstruktur unter Verwendung der optischen Faservorform nach Anspruch 1, wobei
ein Pulver zur Herstellung eines optischen Fasermantels jeweils zwischen dem Kernstab (1) und der ersten Quarztrennröhre (3) und zwischen der ersten Quarztrennröhre (3) und der dünnen Quarzhülle (3) eingefüllt wird, und gleichzeitig ein Ziehen der optischen Faser durchgeführt wird.

5. Verfahren zur Herstellung einer optischen Faser mit Mehrlagenstruktur nach Anspruch 4, wobei eine erste Pulverbefüllungsröhre (7) zwischen dem Kernstab (1) und der ersten Quarztrennröhre (3) angeordnet wird; die erste Pulverbefüllungsröhre (7) um den Kernstab (1) herum umlaufend drehbar ist, und durch die erste Pulverbefüllungsröhre (7) das Pulver zur Herstellung eines optischen Fasermantels zwischen dem Kernstab (1) und der ersten Quarztrennröhre (3) eingefüllt wird;
eine zweite Pulverbefüllungsröhre (8) wird zwischen der ersten Quarztrennröhre (3) und der dünnen Quarzhülle (2) angeordnet; wobei die zweite Pulverbefüllungsröhre (8) um den Kernstab (1) herum umlaufend drehbar ist; wobei, wenn die zweite Pulverbefüllungsröhre (8) um den Kernstab (1) herum umlaufend gedreht wird, das Pulver zur Herstellung eines optischen Fasermantels zwischen der ersten Quarztrennröhre (3) und der dünnen Quarzhülle (2) eingefüllt wird.

6. Verfahren zur Herstellung einer optischen Faser mit Mehrlagenstruktur nach Anspruch 4, wobei
die optische Faservorform an einem Ziehturm befestigt ist; wobei, wenn der erste Abschnitt (9) und der zweite Abschnitt (10) mit einem Quarzpulver befüllt werden, die externe Extraktionsöffnung (56) und die interne Extraktionsöffnung (55) Luft nach außen extrahieren, so dass der Luftdruck des ersten Abschnitts (9) und des zweiten Abschnitts (10) jeweils einen durch einen Benutzer voreingestellten Luftdruckwert erreicht, und gleichzeitig ein Ziehen der optischen Faser durchgeführt wird.

7. Verfahren zur Herstellung einer optischen Faser mit Mehrlagenstruktur nach Anspruch 5, wobei die optische Faservorform ferner eine dichtende rotierende Abdeckung (6) aufweist; die dichtende rotierende Abdeckung (6) eine Hülle auf der Außenseite der zweiten Endröhre (53) bildet und mit der zweiten Endröhre (53) abdichtend und rotierend verbunden wird; die erste Endröhre (52) mit einer ersten kreisförmigen Öffnung (57) zum Hindurchführen der ersten Pulverbefüllungsröhre (7) versehen wird; ein Ende von einer jeweiligen ersten Pulverbefüllungsröhre (7) auf der dichtenden rotierenden Abdeckung (6) offen ist, und das andere Ende von einer jeweiligen ersten Pulverbefüllungsröhre (7) nacheinander die dichtende rotierende Abdeckung (6) und die erste kreisförmige Öffnung (57) durchgreift und in einem Spalt zwischen dem Kernstab (1) und der ersten Quarztrennröhre (3) offen ist;
die zweite Endröhre (53) mit einer zweiten kreisförmigen Öffnung (58) zum Hindurchführen der zweiten Pulverbefüllungsröhre (8) versehen wird; wobei ein Ende der jeweiligen zweiten Pulverbefüllungsröhre (8) auf der dichtenden rotierenden Abdeckung (6) offen ist, und das andere Ende der jeweiligen zweiten Pulverbefüllungsröhre (8) nacheinander die dichtende rotierende Abdeckung (6) und die zweite kreisförmige Öffnung (58) durchgreift und in einem Spalt zwischen der ersten Quarttrennröhre (3) und der dünnen Quarzhülle (2) offen ist;
wobei, während des Ziehens der optischen Faser, die dichtende rotierende Abdeckung (6) so angetrieben wird, dass sie sich derart dreht, dass die erste Pulverbefüllungsröhre (7) und die zweite Pulverbefüllungsröhre (8) um den Kernstab (1) herum umlaufend gedreht wird.

8. Optische Faservorform zur Herstellung einer optischen Faser mit Mehrlagenstruktur, wobei die optische Faservorform einen Kernstab (1), eine dünne Quarzhülle (2), welche eine Hülle außerhalb des Kernstabs (1) bildet, und ein erste Quarztrennröhre (3), welche eine Hülle zwischen dem Kernstab (1) und der dünnen Quarzhülle (2) bildet, aufweist; wobei eine zweite Quarztrennröhre (4) ferner zwischen der ersten Quarztrennröhre (3) und der dünnen Quarzhülle (2) angeordnet ist; ein Pulver zur Herstellung eines optischen Fasermantels jeweils zwischen dem Kernstab (1) und der ersten Quarztrennröhre (3), zwischen der ersten Quarztrennröhre (3) und der zweiten Quarztrennröhre (4) und zwischen der zweiten Quarztrennröhre (4) und der dünnen Quarzhülle (2) eingefüllt werden kann; die optische Faservorform ferner eine Endröhre (5) aufweist; die Endröhre (5) einen Endstab (51), eine erste Endröhre (52), welche eine Hülle außerhalb des Endstabs (51) bildet, eine zweite Endröhre (53), welche eine Hülle außerhalb der ersten Endröhre (52) bildet, und einen Dichtungsstopfen (54) aufweist, der an dem Ende des Endstabs (51), der ersten Endröhre (52) und der zweiten Endröhre (53) angeordnet ist; wobei ein Ende des Endstabs (51) mit dem Kernstab (1) verbunden ist, und das andere Ende des Endstabs (51) mit dem Dichtungsstopfen (54) verbunden ist; eine Öffnung an einem Ende der ersten Endröhre (52) mit der Quarztrennröhre (3) abdichtend verbunden ist, und eine Öffnung an dem anderen Ende der zweiten Endröhre (52) mit dem Dichtungsstopfen (54) abdichtend verbunden ist, eine Öffnung an einem Ende der zweiten Endröhre (53) mit der zweiten Quarztrennröhre (4)) abdichtend verbunden ist, und eine Öffnung an dem anderen Ende der zweiten Endröhre (53) mit dem Dichtungsstopfen (54) abdichtend verbunden ist;
wobei ein Spalt zwischen der ersten Endröhre (52), dem Endstab (51) und dem Dichtungsstopfen (54) mit einem Spalt zwischen dem Kernstab (1) und der ersten Quarztrennröhre (3) so kommuniziert, dass ein erster Abschnitt (9) gebildet wird; wobei der Dichtungstopfen (54) mit einer internen Extraktionsöffnung (55) versehen ist; die interne Extraktionsöffnung (55) mit dem ersten Abschnitt (9) kommuniziert;
ein Spalt zwischen der zweiten Endröhre (53), der ersten Endröhre (52) und dem Dichtungsstopfen (54) mit einem Spalt zwischen der ersten Quarztrennröhre (3) und der zweiten Quarztrennröhre (4) so kommuniziert, dass ein zweiter Abschnitt (10) gebildet wird; der Dichtungsstopfen (54) mit einer externen Extraktionsöffnung (56) versehen ist; die externe Extraktionsöffnung (56) mit dem zweiten Abschnitt (10) kommuniziert.

9. Verfahren zur Herstellung einer optischen Faser mit Mehrlagenstruktur unter Verwendung der optischen Faservorform nach Anspruch 8; wobei
ein Pulver zur Herstellung eines optischen Fasermantels jeweils zwischen dem Kernstab (1) und der ersten Quarztrennröhre (3), zwischen der ersten Quarztrennröhre (3) und der zweiten Quarztrennröhre und zwischen der zweiten Quarztrennröhre und der dünnen Quarzhülle (2) eingefüllt wird und gleichzeitig das Ziehen der optischen Faser durchgeführt wird

## Revendications

1. Une préforme de fibre optique pour la fabrication d'une fibre optique à structure multicouche, dans laquelle la préforme de fibre optique comprend une tige centrale (1), un manchon mince en quartz (2) gainé à l'extérieur de la tige centrale (1) et un premier tube d'isolation en quartz (3) gainé entre la tige centrale (1) et le manchon mince en quartz (2) ; une poudre pour la fabrication d'une gaine de fibre optique peut être remplie respectivement entre la tige centrale (1) et le premier tube d'isolation en quartz (3) et entre le premier tube d'isolation en quartz (3) et le manchon mince en quartz (2) ;
la préforme de fibre optique comprend en outre un tube de queue (5) ; le tube de queue (5) comprend une tige de queue (51), un premier tube de queue (52) gainé à l'extérieur de la tige de queue (51), un deuxième tube de queue (53) gainé à l'extérieur du premier tube de queue (52) et un bouchon d'étanchéité (54) placé à l'extrémité de la tige de queue (51), du premier tube de queue (52) et du deuxième tube de queue (53) ; une extrémité de la tige de queue (51) est reliée à la tige centrale (1), et l'autre extrémité de la tige de queue (51) est reliée au bouchon d'étanchéité (54) ; une ouverture à une extrémité du premier tube de queue (52) est reliée au tube d'isolation en quartz de manière étanche, et une ouverture à l'autre extrémité du premier tube de queue (52) est reliée au bouchon d'étanchéité (54) de manière étanche ; une ouverture à une extrémité du deuxième tube de queue (53) est reliée au manchon mince en quartz (2) de manière étanche, et une ouverture à l'autre extrémité du deuxième tube de queue (53) est reliée au bouchon d'étanchéité (54) de manière étanche ;
un espace entre le premier tube de queue (52), la tige de queue (51) et le bouchon d'étanchéité (54) communique avec un espace entre la tige centrale (1) et le premier tube d'isolation en quartz (3) pour former une première section (9) ; le bouchon d'étanchéité (54) est pourvu d'un orifice d'extraction interne (55) ; l'orifice d'extraction interne (55) communique avec la première section (9) ;
un espace entre le deuxième tube de queue (53), le premier tube de queue (52) et le bouchon d'étanchéité (54) communique avec un espace entre le premier tube d'isolation en quartz (3) et le manchon mince en quartz (2) pour former une deuxième section (10) ; le bouchon d'étanchéité (54) est pourvu d'un orifice d'extraction externe (56) ; l'orifice d'extraction externe (56) communique avec la deuxième section (10).

2. La préforme de fibre optique pour la fabrication d'une fibre optique à structure multicouche selon la revendication 1, dans laquelle la préforme de fibre optique comprend en outre un couvercle rotatif d'étanchéité (6) et au moins un premier tube de remplissage de poudre (7) et au moins un deuxième tube de remplissage de poudre (8) qui traversent le couvercle rotatif d'étanchéité (6) ;
le couvercle rotatif d'étanchéité (6) est placé sur le côté extérieur du deuxième tube de queue (53) et est relié au deuxième tube de queue (53) de manière étanche et rotative ;
le premier tube de queue (52) est pourvu d'une première ouverture circulaire (57) pour le passage du premier tube de remplissage de poudre (7) ; une extrémité de chaque premier tube de remplissage de poudre (7) est ouverte sur le couvercle rotatif d'étanchéité (6), et l'autre extrémité de chaque premier tube de remplissage de poudre (7) passe séquentiellement à travers le couvercle rotatif d'étanchéité (6) et la première ouverture circulaire (57) et est ouverte dans l'espace entre la tige centrale (1) et le premier tube d'isolation en quartz (3) ;
le deuxième tube de queue (53) est pourvu d'une deuxième ouverture circulaire (58) pour le passage du deuxième tube de remplissage de poudre (8) ; une extrémité de chaque deuxième tube de remplissage de poudre (8) est ouverte sur le couvercle rotatif d'étanchéité (6), et l'autre extrémité de chaque deuxième tube de remplissage de poudre (8) traverse séquentiellement le couvercle rotatif d'étanchéité (6) et la deuxième ouverture circulaire (58) et est ouverte dans l'espace entre le premier tube d'isolation en quartz (3) et le manchon mince en quartz (2).

3. La préforme de fibre optique pour la fabrication d'une fibre optique à structure multicouche selon la revendication 2, dans laquelle la préforme de fibre optique comprend deux premiers tubes de remplissage de poudre (7) ; les deux premiers tubes de remplissage de poudre (7) sont disposés symétriquement sur le couvercle rotatif d'étanchéité (6).

4. Un procédé de fabrication d'une fibre optique à structure multicouche utilisant la préforme de fibre optique selon la revendication 1, dans lequel
une poudre pour la fabrication d'une gaine de fibre optique est respectivement remplie entre la tige centrale (1) et le premier tube d'isolation en quartz (3) et entre le premier tube d'isolation en quartz (3) et le manchon mince en quartz (2), et l'étirage de la fibre optique est effectué en même temps.

5. Le procédé de fabrication d'une fibre optique à structure multicouche selon la revendication 4, dans lequel un premier tube de remplissage de poudre (7) est disposé entre la tige centrale (1) et le premier tube d'isolation en quartz (3) ; le premier tube de remplissage de poudre (7) est rotatif sur la circonférence autour de la tige centrale (1), et à travers le premier tube de remplissage de poudre (7), la poudre pour la fabrication d'une gaine de fibre optique est remplie entre la tige centrale (1) et le premier tube d'isolation en quartz (3) ;
un deuxième tube de remplissage de poudre (8) est disposé entre le premier tube d'isolation en quartz (3) et le manchon mince en quartz (2) ; le deuxième tube de remplissage de poudre (8) est rotatif sur la circonférence autour de la tige centrale (1) ; lorsque le deuxième tube de remplissage de poudre (8) est tourné sur la circonférence autour de la tige centrale (1), la poudre pour la fabrication d'une gaine de fibre optique est remplie entre le premier tube d'isolation en quartz (3) et le manchon mince en quartz (2).

6. Le procédé de fabrication d'une fibre optique à structure multicouche selon la revendication 4, dans lequel
la préforme de fibre optique est fixée sur une tour d'étirage ; lorsque la première section (9) et la deuxième section (10) sont remplies de poudre de quartz, l'orifice d'extraction externe (56) et l'orifice d'extraction interne (55) extraient de l'air vers l'extérieur de manière à ce que la pression d'air de la première section (9) et de la deuxième section (10) atteigne respectivement une valeur de pression d'air prédéfinie par un utilisateur, et l'étirage de la fibre optique est effectué en même temps.

7. Le procédé de fabrication d'une fibre optique à structure multicouche selon la revendication 5, dans lequel la préforme de fibre optique comprend en outre un couvercle rotatif d'étanchéité (6) ; le couvercle rotatif d'étanchéité (6) est placé sur le côté extérieur du deuxième tube de queue (53) et est relié au deuxième tube de queue (53) de manière étanche et rotative ;
le premier tube de queue (52) est pourvu d'une première ouverture circulaire (57) pour le passage du premier tube de remplissage de poudre (7) ; une extrémité de chaque premier tube de remplissage de poudre (7) est ouverte sur le couvercle rotatif d'étanchéité (6), et l'autre extrémité de chaque premier tube de remplissage de poudre (7) passe séquentiellement à travers le couvercle rotatif d'étanchéité (6) et la première ouverture circulaire (57) et est ouverte dans un espace entre la tige centrale (1) et le premier tube d'isolation en quartz (3) ;
le deuxième tube de queue (53) est pourvu d'une deuxième ouverture circulaire (58) pour le passage du deuxième tube de remplissage de poudre (8) ; une extrémité de chaque deuxième tube de remplissage de poudre (8) est ouverte sur le couvercle rotatif d'étanchéité (6), et l'autre extrémité de chaque deuxième tube de remplissage de poudre (8) traverse séquentiellement le couvercle rotatif d'étanchéité (6) et la deuxième ouverture circulaire (58) et est ouverte dans un espace entre le premier tube d'isolation en quartz (3) et le manchon mince en quartz (2) ;
pendant l'étirage de la fibre optique, le couvercle rotatif d'étanchéité (6) est entraîné en rotation de sorte que le premier tube de remplissage de poudre (7) et le deuxième tube de remplissage (8) sont tournés circonférentiellement autour de la tige centrale (1).

8. Une préforme de fibre optique pour la fabrication d'une fibre optique à structure multicouche, dans laquelle la préforme de fibre optique comprend une tige centrale (1), un manchon mince en quartz (2) gainé à l'extérieur de la tige centrale (1) et un premier tube d'isolation en quartz (3) gainé entre la tige centrale (1) et le manchon mince en quartz (2) ; un deuxième tube d'isolation en quartz (4) est en outre disposé entre le premier tube d'isolation en quartz (3) et le manchon mince en quartz (2) ; une poudre pour la fabrication d'une gaine de fibre optique peut être remplie respectivement entre la tige centrale (1) et le premier tube d'isolation en quartz (3), entre le premier tube d'isolation en quartz (3) et le deuxième tube d'isolation en quartz (4) et entre le deuxième tube d'isolation en quartz (4) et le manchon mince en quartz (2) ;
la préforme de fibre optique comprend en outre un tube de queue (5) ; le tube de queue (5) comprend une tige de queue (51), un premier tube de queue (52) gainé à l'extérieur de la tige de queue (51), un deuxième tube de queue (53) gainé à l'extérieur du premier tube de queue (52) et un bouchon d'étanchéité (54) placé à l'extrémité de la tige de queue (51), du premier tube de queue (52) et du deuxième tube de queue (53) ; une extrémité de la tige de queue (51) est reliée à la tige centrale (1), et l'autre extrémité de la tige de queue (51) est reliée au bouchon d'étanchéité (54) ; une ouverture à une extrémité du premier tube de queue (52) est reliée au premier tube d'isolation en quartz (3) de manière étanche, et une ouverture à l'autre extrémité du premier tube de queue (52) est reliée au bouchon d'étanchéité (54) de manière étanche ; une ouverture à une extrémité du deuxième tube de queue (53) est reliée au deuxième tube d'isolation en quartz (4) de manière étanche, et une ouverture à l'autre extrémité du deuxième tube de queue (53) est reliée au bouchon d'étanchéité (54) de manière étanche ;
un espace entre le premier tube de queue (52), la tige de queue (51) et le bouchon d'étanchéité (54) communique avec un espace entre la tige centrale (1) et le premier tube d'isolation en quartz (3) pour former une première section (9) ; le bouchon d'étanchéité (54) est pourvu d'un orifice d'extraction interne (55) ; l'orifice d'extraction interne (55) communique avec la première section (9) ;
un espace entre le deuxième tube de queue (53), le premier tube de queue (52) et le bouchon d'étanchéité (54) communique avec un espace entre le premier tube d'isolation en quartz (3) et le deuxième tube d'isolation en quartz (4) pour former une deuxième section (10) ; le bouchon d'étanchéité (54) est pourvu d'un orifice d'extraction externe (56) ; l'orifice d'extraction externe (56) communique avec la deuxième section (10).

9. Un procédé de fabrication d'une fibre optique à structure multicouche utilisant la préforme de fibre optique selon la revendication 8, dans lequel
une poudre pour la fabrication d'une gaine de fibre optique est respectivement remplie entre la tige centrale (1) et le premier tube d'isolation en quartz (3), entre le premier tube d'isolation en quartz (3) et le deuxième tube d'isolation en quartz et entre le deuxième tube d'isolation en quartz et le manchon mince en quartz (2), et le tirage de la fibre optique est effectué en même temps.
